# EUROPEAN PATENT SPECIFICATION

(11) **EP 2 073 455 B1**
(45) Date of publication and mention of the grant of the patent: **13.04.2011**
(21) Application number: 07291606.7
(22) Date of filing: 21.12.2007
(51) Int. Cl.: H04L 12/46, H04L 12/24

(54) **Security management process of at least one VLAN of an ethernet network**
Verfahren zur Sicherheitsverwaltung mindestens eines VLAN eines Ethernet-Netzes
Processus de gestion de la sécurité d'au moins un VLAN d'un réseau Ethernet

(43) Date of publication of application: 24.06.2009
(73) Proprietor: Alcatel Lucent, 75008 Paris (FR)
(72) Inventor: Emery, Jean-Yves c/o Alcatel Lucent, 75008 Paris (FR); Vandenweghe, Cédric c/o Alcatel Lucent, 75008 Paris (FR); Thery, Bruno c/o Alcatel Lucent, 75008 Paris (FR)
(74) Representative: Nicolle, Olivier

(56) References cited:
- US-A1- 2004 160 895
- US-A1- 2005 249 119
- US-A1- 2006 031 482
- US-B1- 6 766 482

## Description

The invention relates to a security management process of at least one VLAN of an Ethernet network and a board for implementing such process.

Wavelength-Division Multiplexing (WDM) equipment generally provides transport of different signals (SDH, SONET, G709) carrying information both about client signal (signal type, framing) and network (Alarm Indication Signal (AIS), Server Service Failure (SSF), protection purpose such as K1, K2 in SDH, ... ) for management purpose.

Document US-2006/031482 describes a method wherein connectivity fault notification is provided by generating an alarm indication signal at a device that is logically adjacent to the fault, and forwarding the alarm indication signal upward through various levels to at least one client level entity.

Document US-2005-249119 describes a system and method for propagating fault information in an Ethernet Operation Administration and Maintenance (OAM) network having multiple levels of OAM domains.

When WDM equipment carries Ethernet signals, two main possible approaches are available:
- Generic Framing Procedure (GFP - Transparent or Framed)
- Layer 2 switch based concentrator.

The GFP provides information to be used in the network management in point to point application but is not suitable for Add/Drop functionality because of board architecture complexity and cost.

Layer 2 switch based concentrator provides both native Add/Drop functionalities and cost effectiveness but does not provide yet a simple and complete suite of layer 2 frame protocols to cope with the WDM network management requirements such as alarm propagation.

For instance, on the receiver side of an Ethernet port the Media Access Control (MAC) sublayer is in charge to check the frame before any process (forwarding,framing...). If error is detected the frame is discarded without inserting information to be read on the far end board terminating the client path. The same way,, when a loss of signal happens, no Client Signal Failure (CSF) is provided to be detected on the far end board.

Two main standards provide protocols to manage either all or a part of the above requirements.

In one hand, G.8031/Y.1342 is dedicated to point to point VLAN protection and not VLAN in ring operation. It provides AIS propagation but requires two VLAN_ID and bandwidth reservation both for working and spare path.

Since VLAN service and the bandwidth are reserved, each bridge at the end point of the VLAN starts to exchange different control packets named Continuity Check Message (CCM) packets on the working path, and / or CCM packets and Automatic Protection Switch (APS) messages dedicated to the coordination of the protection switching process on the spare path. APS provides information on the link status (working and spare), type of protection, manual control...

Such approach is then useless in the WDM context as to participate in any Ethernet process is not wanted, so that basic process such as bridge discovery based on MAC learning and Bridge Protocol Data Unit (BPDU) exchange has to be avoided. Managing two types of messages, one for link continuity and one for switching control, is Central Processing Unit (CPU) consuming at the expense of the protection performance.

In the other hand, Ethernet Automatic Protection Switching (EAPS), proposed by Extreme Networks, provides protection scheme without CSF alarm propagation, preventing from speeding up the protection scheme of the client network.

This approach is based on a master bridge controlling the path protection, a control message managing the ring's health. Intermediate nodes participate in the protection scheme sending specific messages over the VLAN assigned to the control message and detected by the master. This approach requires defining a master, activating MAC learning for bridge operation, flushing VLAN data base on all nodes (master and intermediate) when the main path fails.

The purpose of the invention is to resolve the problems of the prior art by proposing, in particular, a security management process of at least one VLAN of an Ethernet network combining both CSF and the probability of using a spare path in case of failure.

For that purpose and according to a first aspect, the invention relates to a security management process according to claim 1.

According to a second aspect, the invention relates to a board according to claim 12.

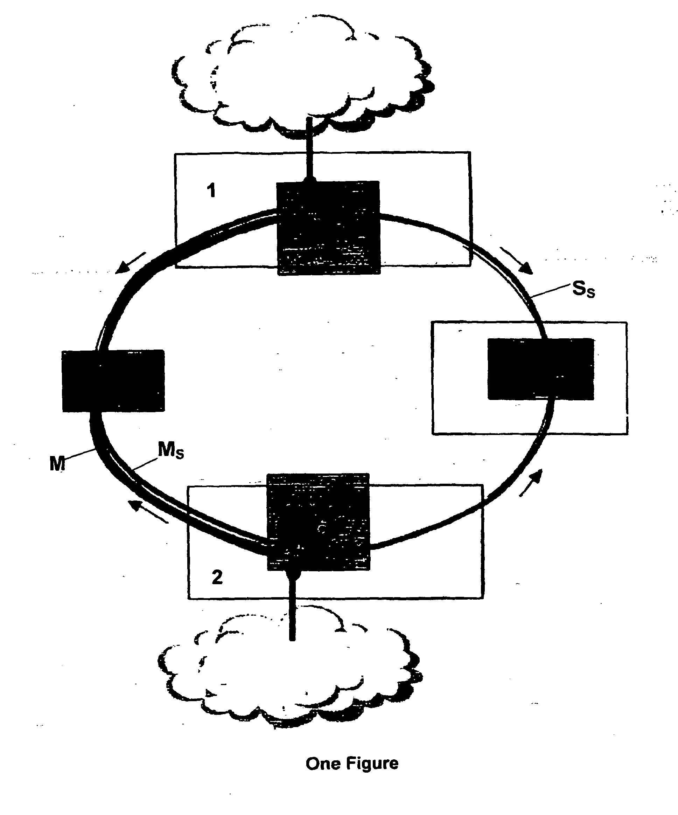

Other aspects and advantages will become apparent in the following description made with reference to the appended figure that illustrates the carrying out of the security management process according to an embodiment of the invention.

The present invention concerns a security management process of at least one main Virtual Local Area Network (VLAN) M of an Ethernet network. The VLAN M is defined for providing a point to point service between an upstream board 1 and a downstream board 2 in a Wavelength-Division Multiplexing (WDM) network.

For instance gigabit Ethernet service being carried using a port based VLAN technology (802.1Q or Provider Bridge 802.1 ad) means that a VLAN is associated to each gigabit Ethernet service port. Thus a VLAN tag is added to each MAC frame arriving on a port. On the far end transmission port of the downstream board 2, the tag is removed before sending the frame. This provides a complete independence between the WDM network and the Ethernet network.

When a failure happens, it is signalled by sending periodically between the boards 1,2 keep-alive messages.

These messages carry identification and failure information concerning the service (e.g. the client signal health, WDM signal health on receiver side, protection level, security management parameters...) and indicate the type of failure, what is to say a Client Signal Failure (CSF) if it happens before the upstream board 1 or a Server Signal Failure (SSF) if between the boards 1,2.

Upon identification of a CFS by the upstream board 1, the keep-alive message propagates the information to the downstream board 2. A SSF is detected upon non reception of at least one keep-alive message by the downstream board 2, said board informs the upstream board 1 of the default detection inserting Remote Defect Indication (RDI) in the keep-alive message running from the downstream board 2 to the upstream board 1.

The periodicity of the keep-alive messages is tunable and is about 10 ms in order to speed up the protection scheme in the switching time range usually achieved in SDH/SONET environment.

These keep-alive messages are encapsulated in a MAC frame and broadcasted over a security VLAN M_{S} which is directly related to the managed VLAN M and uses the same path. The security VLAN M_{S} of the managed VLAN_ID is VLAN_D+X. -

As a consequence, intermediate boards have to be configured in order to forward both managed VLAN M and security VLAN M_{S} (automatically set by the process when the managed VLAN M is provisioned). Each board of the network comprises means to exchange periodically MAC frame encapsulated keep-alive messages with another board, and means to implement a security action adapted to the failure information carried by such messages.

Moreover, the keep-alive message also carries information for activation/deactivation of the sending of the messages between the boards 1,2. Upon download of a firmware in at least one board 1,2 of the VLAN M, such board 1,2 introduces deactivation information during the download and activation information after the completeness of such download.

Whatever the case, CSF or SSF, the downstream board 2 implements a security action adapted to the failure. In the case of a WDM board, the basic security action is the shut-down of the service output laser.

As this path was not secure and the service is interrupted, the security management process proposes to use a spare path to achieve the transmission. However, this solution only suits to SSF as in case of CSF the signal is interrupted before any transmission.

To do so, a main VLAN M, using the previous path and a spare VLAN S, using a different path, are both defined for providing the point to point service between the boards 1,2: for both paths VLAN M_ID=VLAN S_ID.

Upon identification of a SSF in the main VLAN M by the downstream board 2, information about failure detection (RDI) are inserted in the keep-alive message running from the downstream board 2 to the upstream board 1. Upon reception of the RDI information, the upstream board 1 stops sending data over the main VLAN M and sends data over the spare VLAN S. The switching operation is allowed if no failure indication is present on the spare path before switching operation.

The same way as the main VLAN M, the spare VLAN S is also managed by sending keep-alive messages encapsulated in a MAC frame and broadcasted over a specific VLAN S_{S} which is directly related to the spare VLAN S and uses the same path. The security VLAN (S_{S}) of a managed VLAN_ID is VLAN_ID+Y.

Both VLAN M and VLAN S paths are continuously tested in order to provide information for switching operation which is bidirectional.

A single or a double failure on the main path raises an SSF alarm and triggers a switch to the spare path. If the spare path is not available, the protection mechanism tests both paths until one is available.

In addition to the above mechanisms information is provided in the control messages in order to provide usual operator commands such as Force Main, Force Space, Manual Main, Manual Spare.

## Claims

1. Security management process of at least one VLAN (M) of an Ethernet network, such VLAN being defined for providing a point to point service between an upstream board (1) and a downstream board (2), wherein a failure in such service is signalled by sending periodically between the boards (1,2) keep-alive messages carrying failure information, said messages being encapsulated in a MAC frame and broadcasted over a security VLAN (M_{S}) which is directly related to the managed VLAN (M) and uses the same path, said process being **characterized in that** the keep-alive messages also carry information for the activation/deactivation of the sending of the messages between the boards (1, 2), and **in that** upon download of a firmware in at least a board (1, 2) of a VLAN (M), such board introduces deactivation information during the download and activation information after the completeness of such download.

2. Security management process according to claim 1, wherein the Ethernet VLAN (M) is defined in a Wavelength-Division Multiplexing network.

3. Security management process according to claim 1 or 2, wherein the failure information concerns Client Signal Failure before the upstream board (1) and/or Server Signal Failure between the boards (1,2).

4. Security management process according to claim 3, wherein upon identification of a Client Signal Failure by the upstream board (1), the keep-alive message propagates the information to the downstream board (2) in order for such board to implement a security action adapted to the failure.

5. Security management process according to claim 3 or 4, wherein upon non reception of at least one keep-alive message by the downstream board (2), the downstream board (2) implements a security action adapted to the failure.

6. Security management process according to claim 4 or 5, wherein, in the case of a Wavelength-Division Multiplexing, WDM, board, the security action is the shut-down of a service output laser.

7. Security management process according to any of claims 3 to 6, in which a main VLAN (M) and a spare VLAN (S) are both defined for providing the point to point service between the boards (1,2), wherein upon identification of a Server Signal Failure in the main VLAN (M), the downstream board (2) sends to the upstream board (1) a keep-alive message carrying the failure information, and upon receipt of such message, the upstream board (1) broadcasts the service over the spare VLAN (S).

8. Security management process according to claim 7, wherein the spare VLAN (S) is also managed by sending keep-alive messages encapsulated in a MAC frame and broadcasted over a specific VLAN (S_{S}) which is directly related to the spare VLAN (S) and uses the same path.

9. Security management process according to any of previous claims, wherein the periodicity of the keep-alive messages is tunable and is about 10 ms.

10. Board (1,2) for implementing the process according to any of previous claims, said board comprising means to exchange periodically MAC frame encapsulated keep-alive messages with another board (1,2), and means to implement a security action adapted to the failure information carried by such messages, said board being **characterized in that** the MAC frame encapsulated keep-alive messages also carry information for the activation/deactivation of the sending of the messages between said board and another board (1, 2), and **in that** upon download of a firmware in said board, said board being adapted to introduce deactivation information during the download and activation information after the completeness of such download.

## Patentansprüche

1. Verfahren zur Sicherheitsverwaltung mindestens eines VLAN (M) eines Ethernet-Netzwerks, wobei ein solches VLAN für die Bereitstellung eines Punkt-zu-Punkt-Dienstes zwischen einer Upstream-Platine (1) und einer Downstream-Platine (2) definiert ist, wobei ein Fehler in einem solchem Dienst durch das periodische Senden von Keep-Alive-Nachrichten, welche Fehlerinformationen transportieren, zwischen den Platinen (1,2) signalisiert wird, wobei die besagten Nachrichten in einem MAC-Rahmen verkapselt und über ein Sicherheits-VLAN (Mₛ), welches direkt mit dem verwalteten VLAN (M) verbunden ist und den selben Pfad benutzt, ausgesendet werden, wobei das besagte Verfahren **dadurch gekennzeichnet ist, dass** die Keep-Alive-Nachrichten ebenfalls Informationen für das Aktivieren/Deaktivieren des Sendens der Nachrichten zwischen den Platinen (1, 2) transportieren, und dass ein solches Platine nach dem Herunterladen einer Firmware in mindestens einer Platine (1, 2) eines VLAN (M) Deaktivierungsinformationen während des Herunterladens und Aktivierungsinformationen nach dem vollständigen Herunterladen einschleust.

2. Verfahren zur Sicherheitsverwaltung nach Anspruch 1, wobei das Ethernet-VLAN (M) in einem Wellenlängenmultiplex-Netzwerk definiert ist.

3. Verfahren zur Sicherheitsverwaltung nach Anspruch 1 oder 2, wobei die Fehlerinformationen einen Client-Signalfehler vor der Upstream-Platine (1) und/oder einen Server-Signalfehler zwischen den Platinen (1,2) betreffen.

4. Verfahren zur Sicherheitsverwaltung nach Anspruch 3, wobei die Keep-Alive-Nachricht nach der Erkennung eines Client-Signalfehlers durch die Upstream-Platine (1) die Informationen an die Downstream-Platine (2) verbreitet, so dass diese Platine eine dem Fehler entsprechende Sicherheitsaktion implementiert.

5. Verfahren zur Sicherheitsverwaltung nach Anspruch 3 oder 4, wobei die Downstream-Platine (2) bei Nicht-Empfangen mindestens einer Keep-Alive-Nachricht durch die Downstream-Platine (2) eine dem Fehler entsprechende Sicherheitsaktion implementiert.

6. Verfahren zur Sicherheitsverwaltung nach Anspruch 4 oder 5, wobei, im Fall einer Wellenlängenmultiplex-, WDM-Platine, die Sicherheitsaktion das Abschalten einer Dienstausgangs-Laservorrichtung ist.

7. Verfahren zur Sicherheitsverwaltung nach einem der Ansprüche 3 bis 6, wobei sowohl ein Haupt-VLAN (M) als auch ein Reserve-VLAN (S) für das Bereitstellen des Punkt-zu-Punkt-Dienstes zwischen den Platinen (1, 2) definiert sind, wobei die Downstream-Platine (2) nach dem Erkennen eines Server-Signalfehlers in dem Haupt-VLAN (M) eine Keep-Alive-Nachricht, welche die Fehlerinformationen enthält, an die Upstream-Platine (1) sendet, und wobei die Upstream-Platine (1) nach dem Empfang einer solchen Nachricht den Dienst über das Reserve-VLAN (S) aussendet.

8. Verfahren zur Sicherheitsverwaltung nach Anspruch 7, wobei das Reserve-VLAN (S) ebenfalls durch das Senden von in einem MAC-Rahmen verkapselten und über ein spezifisches VLAN (Sₛ), welches direkt mit dem Reserve-VLAN (S) verbunden ist und den selben Pfad benutzt, ausgesendete Keep-Alive-Nachrichten verwaltet wird.

9. Verfahren zur Sicherheitsverwaltung nach einem beliebigen der vorstehenden Ansprüche, wobei die Periodizität der Keep-Alive-Nachrichten abstimmbar ist und etwa 10 ms beträgt.

10. Platine (1, 2) zum Implementieren des Verfahrens nach einem beliebigen der vorstehenden Ansprüche, wobei die besagte Platine Mittel für den periodischen Austausch von in einem MAC-Rahmen verkapselten Keep-Alive-Nachrichten mit einer anderen Platine (1, 2) sowie Mittel zum Implementieren einer den in solchen Nachrichten transportierten Fehlerinformationen entsprechenden Sicherheitsaktion umfasst, wobei die besagte Platine **dadurch gekennzeichnet ist, dass** die in einem MAC-Rahmen verkapselten Keep-Alive-Nachrichten ebenfalls Informationen für das Aktivieren/Deaktivieren des Sendens der Nachrichten zwischen der besagten Platine und einer anderen Platine (1, 2) transportieren, und dass die besagte Platine dazu ausgelegt ist, nach dem Herunterladen einer Firmware in der besagten Platine Deaktivierungsinformationen während des Herunterladens und Aktivierungsinformationen nach dem vollständigen Herunterladen einschleust.

## Revendications

1. Procédé de gestion de la sécurité d'au moins un VLAN (M) d'un réseau Ethernet, ce VLAN étant défini pour fournir un service point à point entre une carte montante (1) et une carte descendante (2), dans lequel une défaillance de ce service est signalée par l'envoi périodique entre les cartes (1, 2) de messages d'entretien transportant des informations de défaillance, lesdits messages étant encapsulés dans une trame MAC et diffusés sur un VLAN de sécurité (M_{S}) qui est directement associé au VLAN géré (M) et qui utilise le même chemin, ledit processus étant **caractérisé en ce que** les messages d'entretien transportent également des informations pour l'activation/la désactivation de l'envoi des messages entre les cartes (1, 2), et **en ce que** lors du téléchargement d'un micrologiciel dans au moins une carte (1, 2) d'un VLAN (M), cette carte introduit des informations de désactivation pendant le téléchargement et des informations d'activation une fois que ce téléchargement est terminé.

2. Procédé de gestion de la sécurité selon la revendication 1, dans lequel le VLAN Ethernet (M) est défini dans un réseau à multiplexage par répartition en longueur d'onde.

3. Procédé de gestion de la sécurité selon la revendication 1 ou 2, dans lequel les informations de défaillance concernent une défaillance de signal client avant la carte montante (1) et/ou une défaillance de signal de serveur entre les cartes (1, 2).

4. Procédé de gestion de la sécurité selon la revendication 3, dans lequel lors de l'identification d'une défaillance de signal client par la carte montante (1), le message d'entretien propage les informations vers la carte descendante (2) afin que cette carte mette en oeuvre une action de sécurité adaptée à la défaillance.

5. Procédé de gestion de la sécurité selon la revendication 3 ou 4, dans lequel lors de la non réception d'au moins un message d'entretien par la carte descendante (2), la carte descendante (2) met en oeuvre une action de sécurité adaptée à la défaillance.

6. Procédé de gestion de la sécurité selon la revendication 4 ou 5, dans lequel, dans le cas d'une carte de multiplexage par répartition en longueur d'onde, WDM, l'action de sécurité est la coupure d'un laser de sortie de service.

7. Procédé de gestion de la sécurité selon l'une quelconque des revendications 3 à 6, dans lequel un VLAN principal (M) et un VLAN de réserve (S) sont tous les deux définis pour fournir le service point à point entre les cartes (1, 2), dans lequel, lors de l'identification d'une défaillance de signal de serveur dans le VLAN principal (M), la carte descendante (2) envoie à la carte montante (1) un message d'entretien transportant les informations de défaillance, et lors de la réception de ce message, la carte montante (1) diffuse le service sur le VLAN de réserve (S).

8. Procédé de gestion de la sécurité selon la revendication 7, dans lequel le VLAN de réserve (S) est également géré par l'envoi de messages d'entretien encapsulés dans une trame MAC et diffusés sur un VLAN spécifique (S_{S}) qui est directement associé au VLAN de réserve (S) et qui utilise le même chemin.

9. Procédé de gestion de la sécurité selon l'une quelconque des revendications précédentes, dans lequel la périodicité des messages d'entretien est accordable et est environ de 10 ms.

10. Carte (1, 2) pour la mise en oeuvre du procédé selon l'une quelconque des revendications précédentes, ladite carte comprenant des moyens pour échanger périodiquement des messages d'entretien encapsulés dans une trame MAC avec une autre carte (1, 2), et des moyens pour mettre en oeuvre une action de sécurité adaptée aux informations de défaillance transportées par ces messages, ladite carte étant **caractérisée en ce que** les messages d'entretien encapsulés dans une trame MAC transportent également des informations pour l'activation/la désactivation de l'envoi des messages entre ladite carte et une autre carte (1, 2), et **en ce que** lors du téléchargement d'un micrologiciel dans ladite carte, ladite carte est adaptée pour introduire des informations de désactivation pendant le téléchargement et des informations d'activation une fois que ce téléchargement est terminé.
